# EUROPEAN PATENT SPECIFICATION

(11) **EP 4 551 002 B1**
(45) Date of publication and mention of the grant of the patent: **18.03.2026**
(21) Application number: 23744294.2
(22) Date of filing: 27.06.2023
(51) Int. Cl.: A01D 34/69, A01D 34/74, A01D 34/68, B60L 15/20

(54) **INDEPENDENTLY CONTROLLED DRIVE WHEEL MOTORS AND OUTDOOR MAINTENANCE VEHICLE INCORPORATING SAME**
UNABHÄNGIG GESTEUERTE ANTRIEBSRADMOTOREN UND WARTUNGSFAHRZEUG FÜR DEN AUSSENBEREICH MIT DIESEN
MOTEURS DE ROUES MOTRICES À COMMANDE INDÉPENDANTE ET VÉHICULE D'ENTRETIEN EXTÉRIEUR LES INCORPORANT

(30) Priority: 08.07.2022 US 202263359621 P; 01.12.2022 US 202263429503 P
(43) Date of publication of application: 14.05.2025
(73) Proprietor: The Toro Company, Bloomington, MN 55420-1196 (US)
(72) Inventor: WADZINSKI, Chris A., Bloomington, Minnesota 55420-1196 (US); ARENDT, Peter M., Bloomington, Minnesota 55420-1196 (US)
(74) Representative: J A Kemp LLP
(86) International application number: PCT/US2023/026299
(87) International publication number: WO 2024/010716

(56) References cited:
- EP-A1- 3 453 243
- DE-A1- 102019 213 294
- US-A- 5 442 901
- US-A1- 2009 201 650
- US-A1- 2013 260 956
- US-A1- 2014 182 954
- US-A1- 2020 128 729

## Description

Embodiments of the present disclosure relate generally to outdoor maintenance vehicles and, more particularly, to such vehicles having independently controlled drive wheel motors.

### BACKGROUND

Outdoor maintenance vehicles such as self-propelled walk-behind mowers are commonly used by homeowners and landscape professionals alike. Walk-behind mowers are adept at both mowing lawns with numerous obstacles (e.g., trees, shrubs, flowerbeds, and the like) that necessitate intricate trimming maneuvers, and mowing lawns that may otherwise be ill-suited to high-speed riding mowers. Moreover, walk-behind mowers are often used when mowing areas with steep slopes.

Some walk-behind mowers have a motor operably coupled to one or more of the wheels to propel the mower at a variable ground speed. Furthermore, the mower may include multiple (e.g., hydraulic) motors, having each motor operably coupled to a different wheel. Typically, a control system is located on a handle of the mower that allows the operator to engage and disengage the motors and to select a desired ground speed.

DE 10 2019 213294 A1 discloses a powered floor care device. US 5 442 901 A discloses a self-propelled mower. US 2020/128729 A1 discloses a self-propelled accessory. EP 3 453 243 A1 discloses a convertible mower. US 2009/201650 A1 discloses controller assemblies and packaging for electronic control systems of electric motors utilized in utility vehicles or other power equipment. US 2014/182954 A1 discloses a continuously variable electric drive module for electric vehicles. US 2013/260956 A1 discloses a vehicle drive device.

### SUMMARY

The above-mentioned drawbacks are overcome by an outdoor maintenance vehicle in accordance with claim 1.

Further preferred embodiments are defined by the dependent claims.

### BRIEF DESCRIPTION OF THE VIEWS OF THE DRAWING

Exemplary embodiments will be further described with reference to the figures of the drawing, wherein:
FIG. 1 is a perspective view of an outdoor maintenance vehicle (e.g., a self-propelled walk-behind lawn mower) having independently controlled wheel motors in accordance with embodiments of the present disclosure;
FIG. 2 is an enlarged perspective view of a handle assembly and speed control apparatus of the vehicle of FIG. 1;
FIG. 3A is an enlarged perspective view of a control grip of the speed control apparatus of FIG. 2;
FIG. 3B is a cross-sectional view of the control grip of FIG. 3A;
FIG. 3C is a side view of the control grip of FIG. 3A;
FIG. 4A is a bottom perspective view of the vehicle of FIG. 1;
FIG. 4B is a bottom plan view of the vehicle of FIG. 1;
FIG. 5 is a partial cross-sectional rear view of the independently controlled wheel motors and corresponding drive wheels of the vehicle of FIG. 1;
FIG. 6 is an isolated perspective view of the independently controlled wheel motors and corresponding drive wheels of the vehicle of FIG. 1;
FIG. 7 is a cross-sectional side view of a wheel gear and a shaft gear associated with the independently controlled wheel motors of the vehicle of FIG. 1;
FIG. 8 is an enlarged perspective view of a shaft gear associated with the independently controlled wheel motors of the vehicle of FIG. 1;
FIG. 9 is a perspective view of an outdoor maintenance vehicle (e.g., a self-propelled walk-behind lawn mower) having independently controlled wheel motors in accordance with another embodiment of the present disclosure;
FIG. 10 is an enlarged perspective view of a handle assembly and speed control apparatus of the vehicle of FIG. 9; and
FIG. 11 is a side view of a handle assembly and speed control apparatus of an outdoor maintenance vehicle in accordance with yet another embodiment of the present disclosure.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### DETAILED DESCRIPTION OF EXEMPLARY EMBODIMENTS

In the following detailed description of illustrative embodiments, reference is made to the accompanying figures of the drawing which form a part hereof. It is to be understood that other embodiments, which may not be described and/or illustrated herein, are certainly contemplated. Unless otherwise indicated, all numbers expressing quantities, and all terms expressing direction/orientation (e.g., vertical, horizontal, parallel, perpendicular, etc.) in the specification and claims are to be understood as being modified in all instances by the term "about."

Generally speaking, embodiments of the present disclosure may be directed to independently controlled drive wheel motors of a power ground working vehicle (e.g., a self-propelled walk-behind lawn mower). Each drive wheel motor may be independently controlled in a forward and reverse direction at operator-controlled speeds. For example, a control system of the vehicle may include a speed control apparatus movably connected to a handle assembly and adapted to control each drive wheel motor separately. Specifically, the speed control apparatus may include a first and second control grip that are operably coupled and configured to engage (e.g., activate) a first and second drive wheel motor, respectively. By independently controlling the drive wheel motors, forward and reverse speed changes, as well as left and right turning, may be accomplished.

Further, in one or more embodiments, the drive wheel motors may be connected by an alignment shaft therebetween. The alignment shaft may be configured to move independently from either of the drive wheel motors or drive shafts thereof (e.g., the alignment shaft may remain stationary while a shaft of each of the drive wheel motors rotates). While the drive wheel motors are independent from one another, the alignment shaft may assist to maintain a consistent drive axis between each of the drive wheels. In other words, the alignment shaft may align the drive wheels such that each rotates about a parallel and coaxial axis and the wheels may not become misaligned.

Further yet, in one or more embodiments, the drive wheel motors may be fixedly coupled to a housing (e.g., a deck housing) or body portion of the vehicle. As such, when an elevation of (at least a portion of) the housing or body portion is adjusted relative to the ground surface, the drive wheel motors move along with the housing or body portion during such elevation adjustment. In other words, the drive wheel motors may not move relative to the housing (e.g., because the drive wheel motors are fixedly attached thereto), regardless of the elevation. In one or more embodiments, the drive wheels may be moved (e.g., pivoted) relative to the housing to adjust the elevation of the housing. In other words, the drive wheels may move independent of the housing to adjust the elevation of the housing. In such embodiments, the drive wheel motors may move along with the housing and not with the drive wheels (e.g., physical movement of the drive wheels is independent from the drive wheel motors even though they are operably connected).

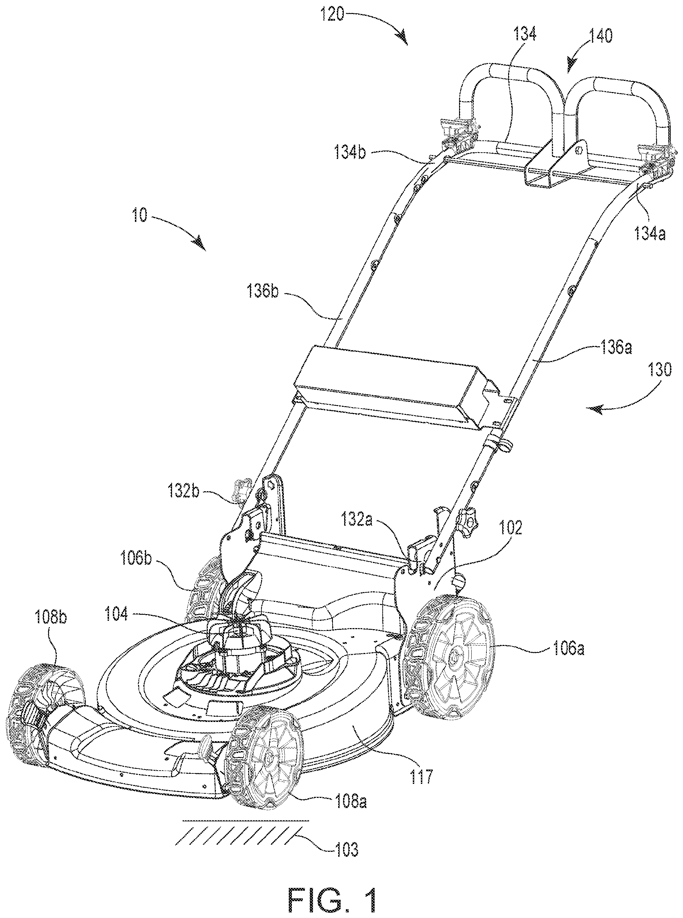

With reference to the figures of the drawing, wherein like reference numerals designate like parts and assemblies throughout the several views, FIG. 1 illustrates an outdoor maintenance vehicle in accordance with exemplary embodiments of the present disclosure. While shown in this view as a self-propelled, ground working vehicle, e.g., a walk-behind lawn mower 10 (also referred to herein simply as a "vehicle" or "mower"), such a configuration is not limiting. That is, while embodiments are described herein with respect to a walk-behind mower, those of skill in the art will realize that this disclosure is equally applicable to other types of mowers (e.g., wide-area walk-behind mowers, etc.), as well as to other types of walk-behind power equipment or indoor and outdoor maintenance vehicles (e.g., spreader/sprayers, debris management systems (e.g., blowers, vacuums, sweepers, etc.), snow throwers, construction/demolition equipment and the like) without limitation.

It is noted that the term "comprises" (and variations thereof) does not have a limiting meaning where this term appears in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective of one operating the mower 10 while the mower is in an operating configuration, e.g., while the mower 10 is positioned such that wheels 106 and 108 rest upon a generally horizontal ground surface 103 as shown in FIG. 1. These terms are used only to simplify the description, however, and not to limit the interpretation of any embodiment described.

Still further, the suffixes "a" and "b" may be used throughout this description to denote various left- and right- side parts/features, respectively. However, in most pertinent respects, the parts/features denoted with "a" and "b" suffixes are substantially identical to, or mirror images of, one another. It is understood that, unless otherwise noted, the description of an individual part/feature (e.g., part/feature identified with an "a" suffix) also applies to the opposing part/feature (e.g., part/feature identified with a "b" suffix). Similarly, the description of a part/feature identified with no suffix may apply, unless noted otherwise, to both the corresponding left and right part/feature.

As shown in FIG. 1, the mower 10 may include a frame or chassis 102 that defines a housing 117 (e.g., a deck housing) of the mower 10 and that supports a prime mover 104. The prime mover 104 may be configured as most any source of power such as, for example, an internal combustion engine, an electric motor, etc. The chassis 102 (e.g., housing 117) may be supported upon the ground surface 103 by ground-engaging members that, in one embodiment, include left and right ground-engaging drive wheels 106 (e.g., left drive wheel 106a and right drive wheel 106b) that may be operably (rotatably) coupled to left and right sides of a rear portion of the housing of the mower 10. The drive wheels 106 may be operably coupled to separate electric motors such that each drive wheel 106 may be independently controllable, as further described herein. The drive wheels 106 may be powered by the independent electric motors so that each drive wheel 106 may rotate (e.g., relative to the chassis) and selectively propel the mower 10 over the ground surface 103.

The prime mover 104 may power a tool, e.g., a cutting deck blade movably connected to the housing 117. As shown in FIG. 1, a pair of front ground-engaging members (e.g., front wheels 108a, 108b) may support a front portion of the mower 10 in rolling engagement with the ground surface 103. Of course, other drive configurations (e.g., front wheel or all-wheel drive), are certainly contemplated within the scope of this disclosure.

An implement adapted to perform a maintenance task, e.g., the housing 117, may be part of, or otherwise carried by, the chassis 102 of the mower 10, e.g., generally between the drive wheels 106 and the front wheels 108. The housing 117 may form a housing that defines a downwardly-opening chamber (e.g., a cutting chamber) or cavity (as is known in the art). The chamber may partially surround one or more vehicle tools (e.g., rotatable cutting blades) powered by the prime mover. During operation, power is selectively delivered to the powered tool and the drive wheels 106, whereby, for example, a cutting blade rotates at a speed sufficient to sever grass and other vegetation as the housing passes over the ground surface 103. Typically, the housing 117 includes an operator-selectable height of cut control system to allow deck height adjustment relative to the ground surface 103.

Further, the mower 10 may include a control system to assist in controlling the mower 10 (e.g., assist in guiding and propelling the mower 10 across the ground surface 103). For example, the control system may include a handle assembly or handle 120 extending from the chassis 102 so that an operator can guide the mower 10 across the ground surface 103. For example, the handle assembly 120, which may include one or more handle members 130, may extend upwardly and rearwardly from the chassis 102/housing 117 (e.g., to a position behind the chassis 102 proximate an operator walking behind the mower 10).

The handle member 130 may include at least one handle tube 136 extending between a lower end 132 and an upper end 134. In some embodiments, the handle member 130 may include a left handle tube 136a and a right handle tube 136b spaced apart from one another. The lower end 132 (e.g., left lower end 132a and right lower end 132b) of the handle member 130 may be attached to the chassis 102 and the upper ends 134 of the handle member 130 may be positioned to be proximate the operator using the mower 10. In one or more embodiments, the upper end 134 of the handle member 130 may extend between, and join, the left and right handle tubes 136a, 136b.

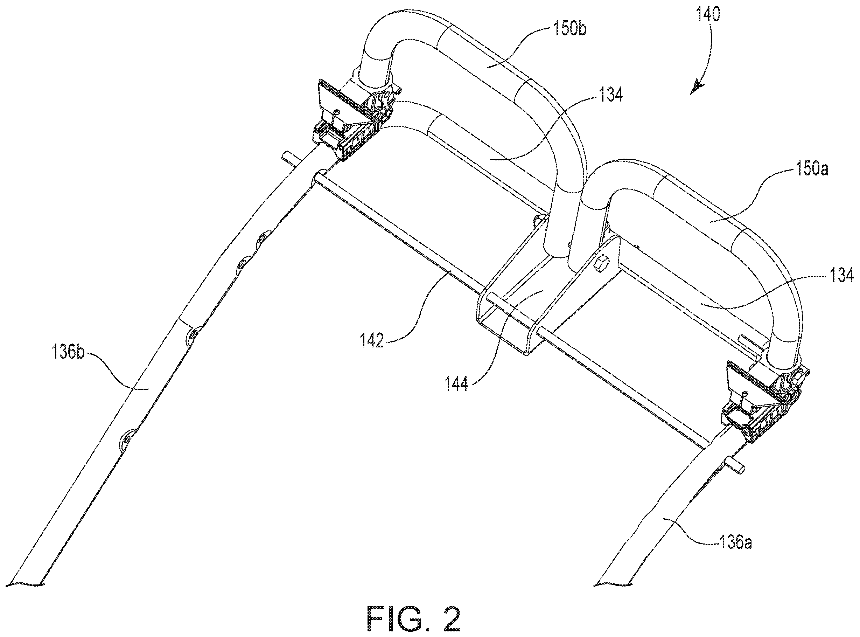

The control system may also include a speed control apparatus 140 also shown in FIG. 2. The speed control apparatus 140 may be adapted to activate or energize the electric motors of the mower 10 to propel the chassis 102 across the ground surface 103. The speed control apparatus 140 may include a first control grip 150a and a second control grip 150b operably connected to (e.g., positioned at or near the upper end 134), and movable relative to, the handle member 130. Specifically, the speed control apparatus 140 may include a support member 142 extending between the handle tubes 136 and spaced away from the upper end 134 of the handle member 130. Further, the support member 142 may extend parallel to the upper end 134 of the handle member 130. Also, the speed control apparatus 140 may include a middle bracket 144 connected between the support member 142 and the upper end 134 of the handle member 130 (e.g., at a middle point between the handle tubes 136). The control grips 150 may be movably connected to the handle assembly 120/handle member 130 (e.g., between the middle bracket 144 and the corresponding handle tube 136). For example, the first control grip 150a may be pivotally connected between the left handle tube 136a and the middle bracket 144 and the second control grip 150b may be pivotally connected between the right handle tube 136b and the middle bracket 144. As a result, each of the control grips 150 may be configured to independently move (e.g., pivot) relative to the handle member 130.

The control grips 150 may be operably connected to a corresponding electric motor to control a corresponding drive wheel 106. Therefore, the control grips 150 may be separately controlled by the operator to independently control the drive wheels 106. For example, the first control grip 150a may be configured to control rotation of the left drive wheel 106a and the second control grip 150b may be configured to control rotation of the right drive wheel 106b. In other words, movement of the first control grip 150a may engage (e.g., activate) one of the electric motors and movement of the second control grip 150b may engage (e.g., activate) the other of the electric motors. Specifically, pivoting the first control grip 150a forward and downward (e.g., relative to the handle member 130) may activate or energize a first electric motor to proportionally drive the left drive wheel 106a in a forward direction and pivoting the second control grip 150b forward and downward (e.g., relative to the handle member 130) may activate or energize a second electric motor to proportionally drive the right drive wheel 106b in a forward direction.

In one or more embodiments, the control grips 150 may also independently pivot in a rearward direction (e.g., relative to the handle member 130) to activate or energize the corresponding electric motor to proportionally drive the corresponding drive wheel 106 in a rearward direction. Further, because the first and second control grips 150 may be independently controlled, the selective speed of the corresponding drive wheel 106 may similarly be independently controlled (e.g., both of the drive wheels 106 in the forward direction, both of the drive wheels 106 in a rearward direction, the left drive wheel 106a in the forward direction and the right drive wheel 106b in the rearward direction, the left drive wheel 106a in the rearward direction and the right drive wheel 106b in the forward direction, etc.). Depending on the speed and direction of each drive wheel 106, the housing 117 may be propelled in a forward direction, a rearward direction, or various degrees of left or right turns (e.g., forward or reverse).

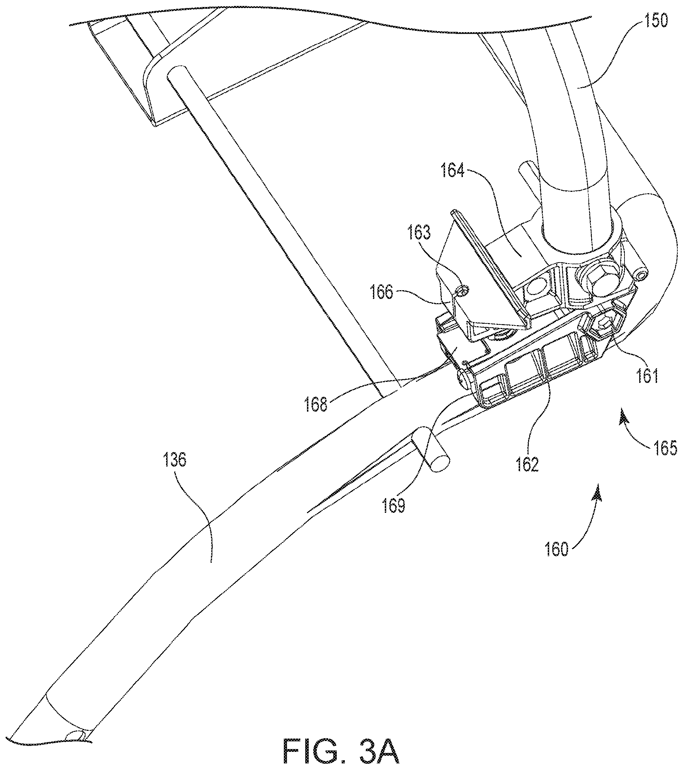

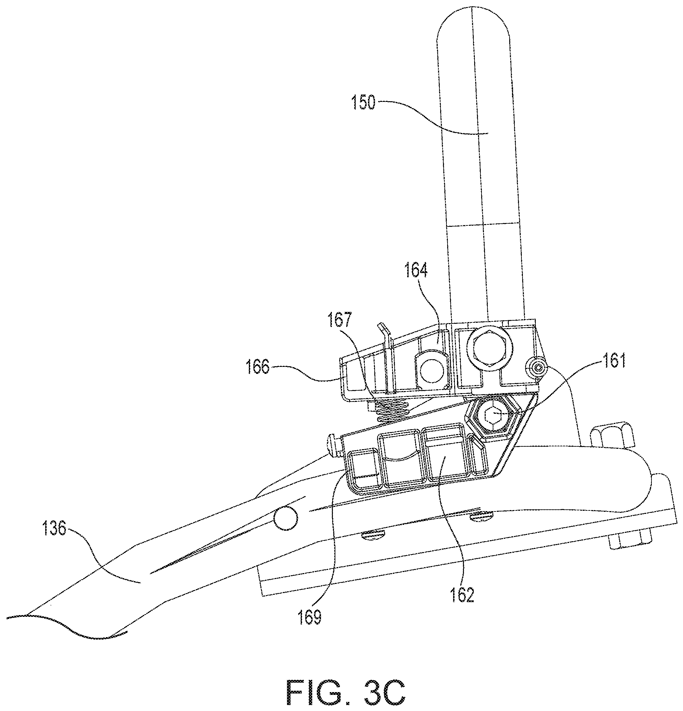

The control grips 150 of the speed control apparatus 140 may include a variety of different components. For example, each control grip 150 may include a control device 160 (see FIG. 3A) to assist in moving the corresponding control grip 150 relative to the handle member 130. Specifically, the control device 160 may be configured to move the control grip 150 relative to the handle member 130 in a variety of different ways such as, e.g., linearly, rotationally, pivotally, etc. Further, the control device 160 may be configured to transmit or convert movement of the control grip 150 (e.g., relative to the handle member 130) to engage or activate (e.g., proportionally) the corresponding electric motor as described further herein.

As shown in FIGS. 3A-3C, each control grip 150 may include a pivoting control device 160 (e.g., only the pivoting control device 160 for the left control grip 150a is shown, but the pivoting control device of the right control grip 150 is a mirror image thereof). The control device 160 may include a fixed body portion 162 substantially rigidly secured to the handle tube 136 by one or more fasteners (e.g., extending upwardly through apertures in the bottom side of the handle tube 136 and into threaded bores of the fixed body portion 162). The control device 160 may also include a movable body portion 164 that that moves or pivots relative to the fixed body portion 162. Specifically, the control device 160 may include a hinge 165 (e.g., located proximate the rear of the control device 160) made up of a portion of the fixed body portion 162 and a portion of the movable body portion 164 having a pin or bolt 161 extending therethrough. Other exemplary embodiments of control devices 160, and description of components related thereto, may be found in U.S. Pat. App. No. 17/488,643 entitled A Walk Outdoor Power Equipment Unity Having Handle Mounted Operational Controls Using Compliant Mechanisms, filed 29 September 2021, and published as US2023-0098509A1. The movable body portion 164 of the control device 160 may be configured to receive an end of the control grip 150 to couple the control grip 150 to the control device 160 (e.g., such that the control grip 150 may pivot or move as a result of the control device 160).

The first and second control grips 150 may be either electrically or mechanically coupled to the first and second electric motors, respectively. For example, the electric motors may be controlled through electrical signals or cables operably connected between the control grips 150 and the electric motors.

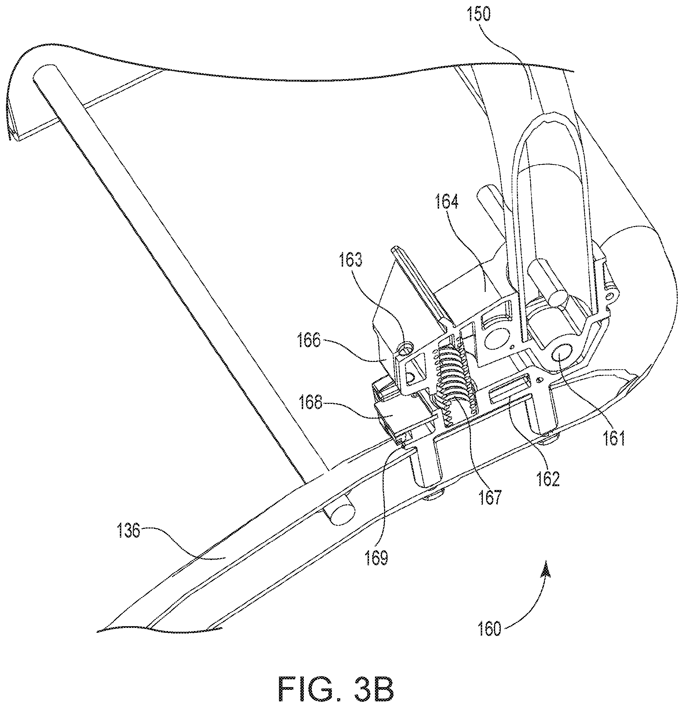

In one or more embodiments, the movable body portion 164 of the control device 160 may define an opening 163 proximate a front end 166 of the movable body portion 164. The opening 163 may be configured to receive a magnet (not shown) to be retained within the movable body portion 164 proximate the front end 166. Further, the fixed body portion 162 may include a sensor 168 (e.g., a Hall sensor, a force sensor, a magnetic sensor, etc.) proximate a front end 169 of the fixed body portion 162 (e.g., as shown in FIGS. 3A and 3B). If the control grip 150 is pushed forward (e.g., from a neutral position), the front end 166 of the movable body portion 164 may move or pivot generally downwards towards the front end 169 of the fixed body portion 162. As the magnet moves closer to the sensor 168, the electric motor may become energized to provide forward rotation of the drive wheel 106. Further, the motion sensing device created by the combination of the magnet and sensor 168 may provide an infinite number of positions therebetween that translate into an infinite number of correlated speeds. In other words, the operational speed forward of the corresponding drive wheel 106 may directly relate to how far forward the corresponding control grip 150 has been pivoted relative to the handle member 130.

Conversely, if the control grip 150 is pushed rearward (e.g., from a neutral position), the front end 166 of the movable body portion 164 may move or pivot generally upwards away from the front end 169 of the fixed body portion 162. As the magnet moves away from the sensor 168, the electric motor may become energized to provide rearward rotation of the drive wheel 106. Similarly, the operational speed rearward of the corresponding drive wheel 106 may directly relate to how far backward the corresponding hand grip 150 has been pivoted relative to the handle member 130.

Further, in one or more embodiments, the control device 160 may include a biasing member 167 (e.g., a spring) connected between the fixed body portion 162 and the movable body portion 164. The biasing member 167 may be configured to bias the fixed body portion 162 relative to the movable body portion 164 into a neutral position in which the speed of the corresponding drive wheel is zero. In one or more embodiments, the neutral position may also be established by a physical stop or indent that limits movement between the fixed body portion 162 and the movable body portion 164.

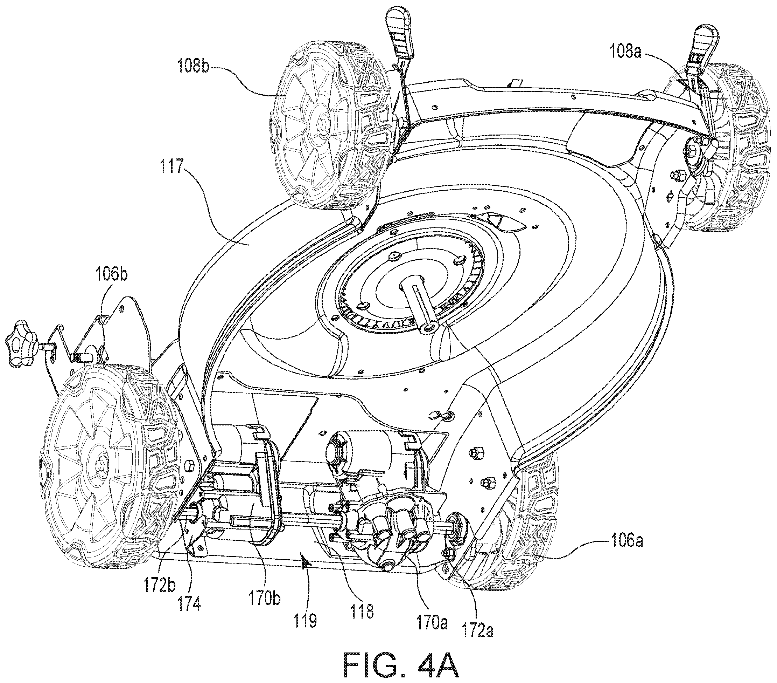

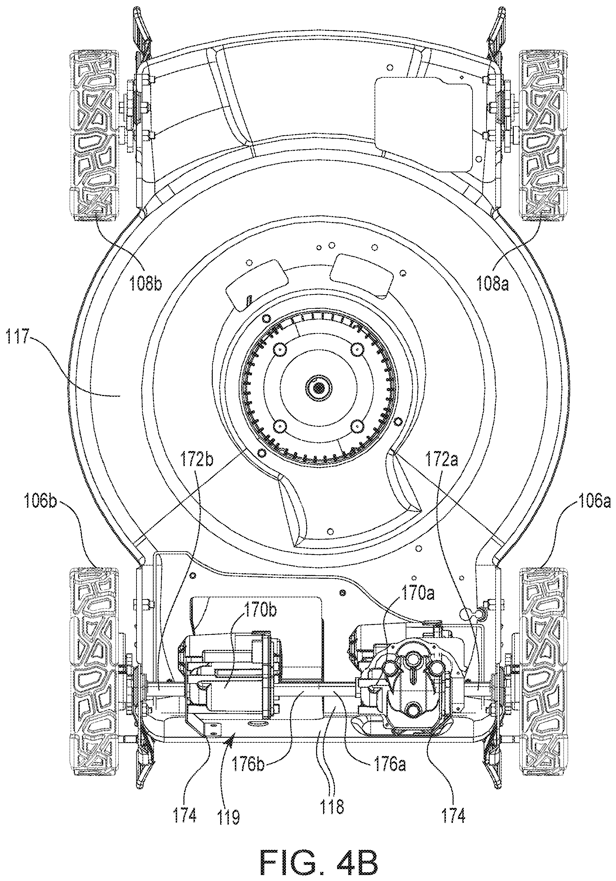

Two electric motors 170 (first (e.g., left) electric motor 170a and second (e.g., right) electric motor 170b) of the vehicle are illustrated in FIGS. 4A and 4B. The two electric motors 170 are fixedly coupled to the housing 117 and spaced apart from one another. Further, each electric motor 170 is operably coupled to a corresponding drive wheel 106 (i.e., first electric motor 170a is operably coupled to the left drive wheel 106a, while second electric motor 170b is operably coupled to the right drive wheel 106b) such that the corresponding drive wheel 106 rotates when the electric motor 170 is energized or engaged. For example, the left electric motor 170a is operably coupled to the left drive wheel 106a and configured to rotate the left drive wheel 106a. Also, the right electric motor 170b is operably coupled to the right drive wheel 106b and configured to rotate the right drive wheel 106b. Specifically, each electric motor 170 may be operably coupled to the corresponding drive wheel 106 through a drive shaft ("shaft") 172. Further, the shafts 172 of each electric motor 170 may not be rotatably coupled or connected to each other such that the separate shafts 172 rotate independently from one another. Therefore, each electric motor 170 is configured to rotate a shaft 172, which is configured to rotate a drive wheel 106 (e.g., without affecting the rotation generated by the other electric motor).

Each electric motor 170 may be fixedly coupled or mounted to or under an inner surface 118 (e.g., a horizontal or a vertical surface) of the housing 117 (e.g., when the vehicle is in an operating orientation on the ground surface 103). Further, the electric motors 170 may be spaced apart from the housing 117 by a fixed distance. Therefore, the electric motors 170 move along with the housing 117 as the housing 117 moves relative to the ground surface 103 during elevational adjustments of the housing. In other words, the electric motors 170 may move along with the housing 117 when an elevation of, at least a portion of, the housing 117 is adjusted relative to the ground surface 103, e.g., to change a height of cut.

Specifically, the two electric motors 170 may be located within a cavity 119 of the housing 117. The cavity 119 may be defined by the inner surface 118 and one or more sides (e.g., extending downward from, or otherwise proximate to, the inner surface 118) of the housing 117. In one or more embodiments, the cavity 119 (e.g., within which the electric motors 170 are positioned) may be separate from a chamber (e.g., a cutting chamber) of the housing 117 (e.g., a location in which a cutting blade is located).

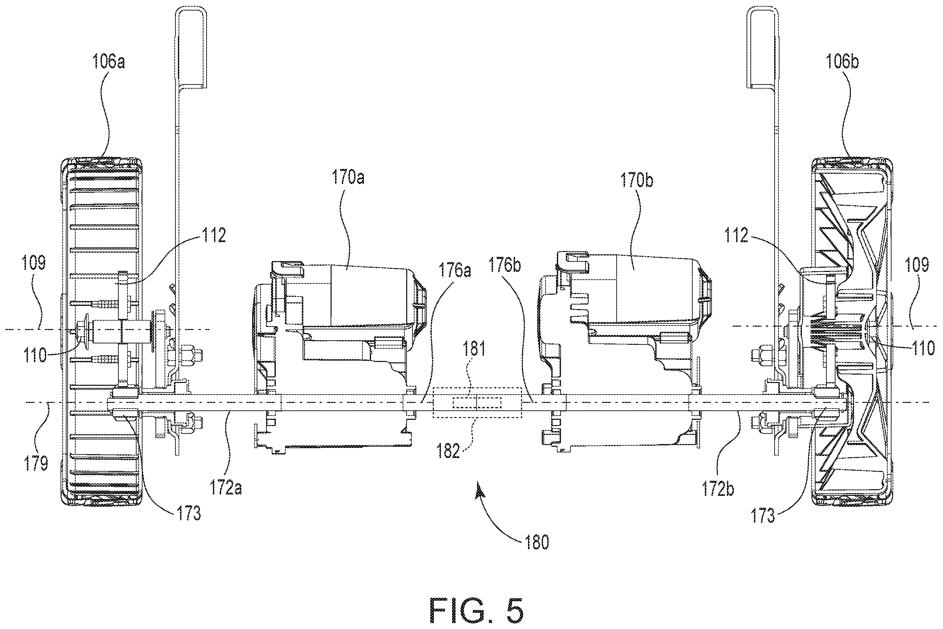

The electric motors 170 may be coupled to the housing 117 in any suitable way. For example, as shown in FIG. 4A, each electric motor 170 may be coupled to the housing 117 by only one single bracket 174. As will be described further herein, an alignment shaft 180 (see FIG. 5) may be positioned between the electric motors 170, and the alignment shaft 180 may assist with maintaining the positioning of the electric motors 170. In other words, typically supporting an electric motor with only a single bracket may result in the electric motor being cantilevered. However, the alignment shaft 180 is also connected to the electric motor 170 to support the electric motor 170 at another point other than the single bracket 174. Furthermore, while the electric motor 170 is described as being attached to the housing 117 by a single bracket 174, in one or more embodiments, more than one bracket may be utilized to attach each electric motor 170 to the housing 117.

As shown in FIG. 4B, each electric motor 170 includes a shaft 172 (e.g., an outer shaft) and an inner shaft 176. The outer and inner shafts 172, 176 may extend laterally from respective opposite sides of the electric motor 170. Further, each of the outer shafts 172 may be operably coupled to the corresponding drive wheels 106. For example, the outer shaft 172a of the left electric motor 170a may be operably coupled to the left drive wheel 106a and the outer shaft 172b of the right electric motor 170b may be operably coupled to the right drive wheel 106b. The inner shafts 176 of the electric motors 170 may rotate at the same rotational velocity as the corresponding outer shafts 172 or a different rotational velocity as the corresponding outer shaft 172 (e.g., if the electric motor 170 includes an internal differential). Regardless, the rotation of the inner shafts 176 of the electric motors 170 are not connected or tied to one another in any way. In other words, the rotation of the inner shaft 176 of the left electric motor 170a may be independent from the rotation of the inner shaft 176 of the right electric motor 170b. Further, the inner shafts 176 of the electric motors 170 may be aligned along an axis (e.g., to align the electric motors 170) and extend toward one another as described further herein.

FIG. 5 illustrates a rear cross-sectional view of the electric motors 170 positioned relative to one another. For example, as described herein, each of the outer shafts 172 of the electric motors 170 are operably connected to the corresponding drive wheels 106 (e.g., through gears). Further, an alignment shaft 180 in accordance with the invention is connected between the two electric motors 170 (e.g., to align the two electric motors). For example, the alignment shaft 180 may be operably connected to the inner shaft 176 of both of the two electric motors 170. Further, the alignment shaft 180 may be configured to rotate (or not rotate) independently from at least one of (or both of) the inner shafts 176 that the alignment shaft 180 is operably connected. As such, the alignment shaft 180 may not transfer any movement or rotation between the inner shafts 176 of the electric motors 170.

The alignment shaft 180 may align with the outer shafts 172 (and inner shafts 176) along a shaft axis 179. Further, the alignment shaft 180 may help maintain the alignment and positioning of the outer shafts 172. By maintaining the alignment and positioning of the outer shafts 172, the connection between the outer shafts 172 and the drive wheels 106 may be more robust (e.g., to resist and/or prevent potential misalignment).

In one or more embodiments, the alignment shaft 180 may extend between an inner surface of each of the electric motors 170. For example, the alignment shaft 180 may be connected to an indent or protrusion located on the inner surface of each of the electric motors 170.

In one or more embodiments, the alignment shaft 180 may include a pin 181 or dowel (e.g., shown in dashed lines in FIG. 5) extending through both of the inner shafts 176. For example, each of the inner shafts 176 may define a passageway therethrough to receive the pin 181. The pin 181 may move freely within each of the inner shafts 176 such that any rotational movement of one of the inner shafts 176 may not be transferred to the other of the inner shafts 176. Further, the pin 181 may define a length that is at least half of the length of one of the inner shafts 176.

In one or more embodiments, the alignment shaft 180 may include a tube 182 (e.g., shown in dashed lines in FIG. 5) extending between (and surrounding a portion of) the inner shafts 176 of both of the electric motors 170. For example, the tube 182 may define a passageway that is configured to receive each of the inner shafts 176 via the ends of the tube 182. The tube may move freely along each of the inner shafts 176 such that any rotational movement of one of the inner shafts 176 may not be transferred to the other of the inner shafts 176. Further, the tube 182 may define a length that is at least half of the length of the one of the inner shafts 176.

Regardless of whether the alignment shaft 180 is a pin 181, a tube 182, or extends completely between the inner surfaces of each electric motor 170, the alignment shaft 180 may only be connected to the housing 117 through the electric motors 170. In other words, the alignment shaft 180 may not be directly attached or coupled to the housing 117.

Also, as shown in FIG. 5, the alignment shaft 180 aligns the inner shafts 176 along the shaft axis 179. Further, the outer shafts 172 may be aligned along the shaft axis 179 as well. Therefore, each of the outer shafts 172 may be configured to rotate about the shaft axis 179 (e.g., via the electric motors 170). Additionally, in one or more embodiments, each of the drive wheels 106 may be configured to rotate about a wheel axis 109 (wheel axis of rotation) that is parallel to the shaft axis 179. Specifically, each drive wheel 106 may be coupled to a wheel shaft 110 that allows rotation about the wheel axis 109. Further, the wheel shaft 110 may include a wheel gear 112 that is positioned to engage a shaft gear 173 of the outer shaft 172 of the electric motor 170.

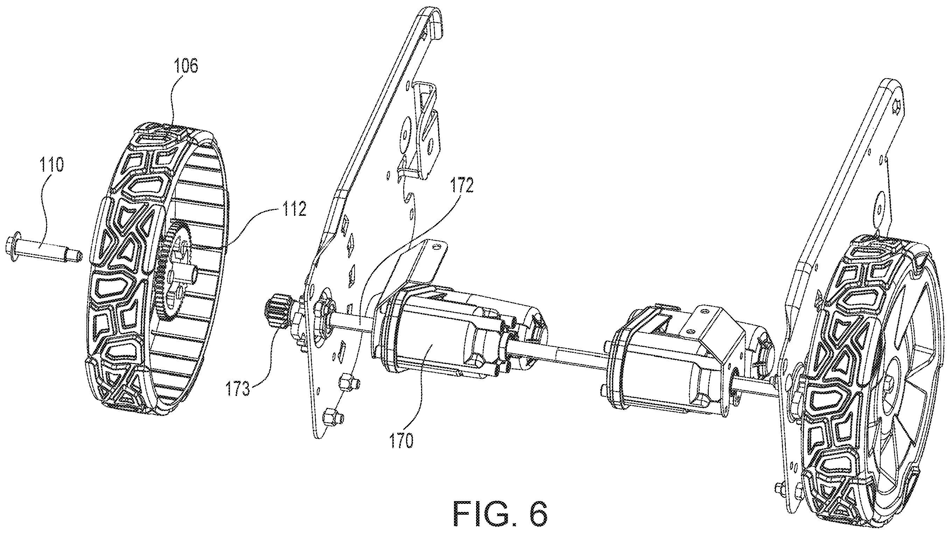

Another perspective view of the wheel gear 112 and the shaft gear 173 is shown in FIG. 6. Each electric motor 170 may be configured to rotate its outer shaft 172 and the outer shaft 172 may include a shaft gear 173 at an end of the outer shaft 172 (e.g., opposite the electric motor 170). Further, the wheel shaft 110 (e.g., in an exploded position in FIG. 6) may couple between the drive wheel 106 and the wheel gear 112. The shaft gear 173 and the wheel gear 112 may mesh to convert rotational motion of the outer shaft 172 (e.g., via the electric motor 170) to rotational motion of the corresponding drive wheel 106.

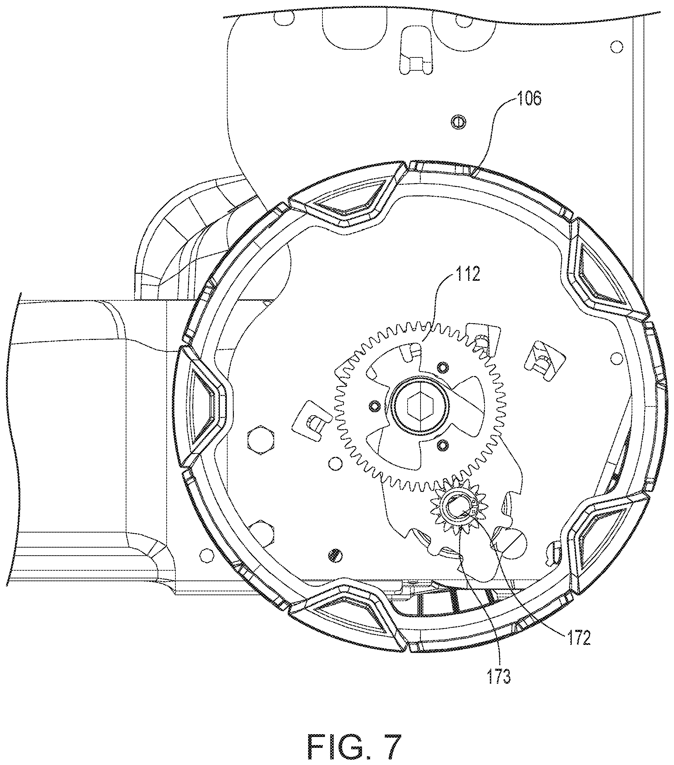

For example, FIG. 7 illustrates a cross-sectional side view of the wheel gear 112 of the drive wheel 106 and the shaft gear 173 of the outer shaft 172. As described herein, the shaft gear 173 is positioned to mesh teeth of the shaft gear 173 with teeth of the wheel gear 112. The shaft gear 173 and the wheel gear 112 may define various dimensions to provide a speed reduction of the rotational motion generated by the electric motor 170 (e.g., reducing the relatively high rotational speed of the outer shaft 172 to a lower speed suitable for a self-propelling mower at ground speeds that match the walking pace of the operator). Further, the presence of the alignment shaft 180 may assist in maintaining the positioning and orientation of the outer shaft 172 such that the teeth of the shaft gear 173 stay engaged with the wheel gear 112.

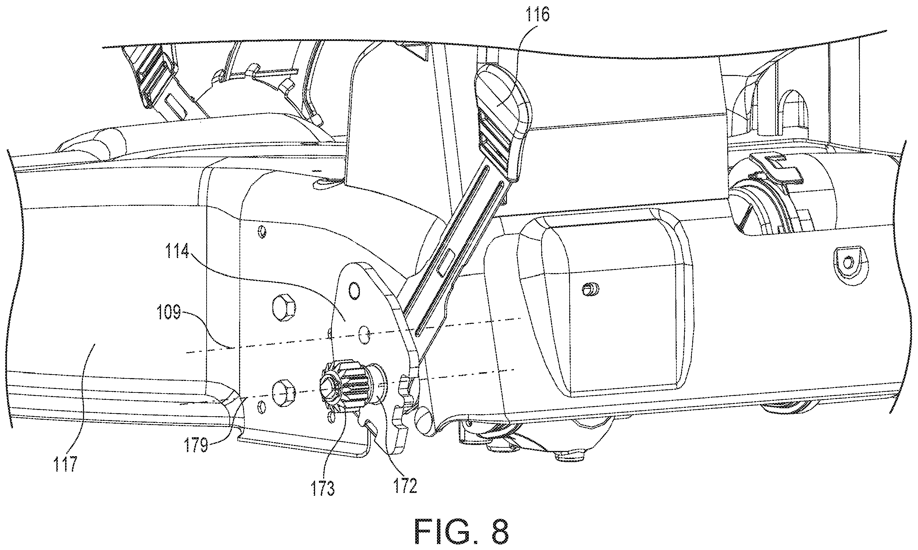

The outer shaft 172 extending through an opening of the housing 117 is shown in FIG. 8. Furthermore, the housing 117 may include a plate 114 that is operably connected to the outer shaft 172 and to the drive wheel 106 (e.g., to the wheel shaft 110). Because the outer shaft 172 of the electric motor 170 and the wheel shaft 110 are both located by the plate 114, the outer shaft 172 and the wheel shaft 110 are spaced apart by a fixed distance. This fixed distance may ensure that the wheel gear 112 of the wheel/wheel shaft and the shaft gear 173 of the outer shaft maintain a proper engagement to transfer rotational motion regardless of mower height of cut.

Further, the outer shaft 172 may be coupled to the plate 114 such that the plate 114 pivots about the outer shaft 172 (e.g., about the shaft axis 179). Therefore, because the wheel shaft 110 is coupled to the plate 114, the wheel shaft 110 pivots about the outer shaft 172 (e.g., while the shaft axis 179 and the wheel axis 109 stay parallel to one another). As the wheel shaft 110 pivots about the shaft axis 179, the distance between a lowest point of the drive wheel 106 (e.g., positioned on the ground surface 103) and the housing 117 varies. In other words, the height of cut of the housing 117 may be altered by pivoting the plate 114. Also, the electric motors 170 move along with the housing 117 relative to the ground surface 103 (e.g., because the electric motors 170 are fixedly coupled to the housing 117 as described herein).

Additionally, as shown in FIG. 8, the plate 114 may include a lever 116 to assist the operator in pivoting the plate 114. For example, the lever 116 may similarly pivot and result in a corresponding pivoting motion of the plate 114. Further, the lever 116 may be configurable between a locked position and an unlocked position. For example, lever 116 may be biased in a locked position and the operator may move the lever 116 to the unlocked position (e.g., in a direction away from (or, alternatively, towards) the housing 117) and pivot the lever 116 (e.g., thereby pivoting the plate 114 and changing the height of cut). After pivoting the lever 116 to the desired location to set the height of cut, the operator may move the lever 116 back into the locked position. The lever 116 of FIG. 8 is only associated with the rear drive wheel 106b, but a similar lever or other type of height of cut adjuster may be included on any of the other wheels of the mower.

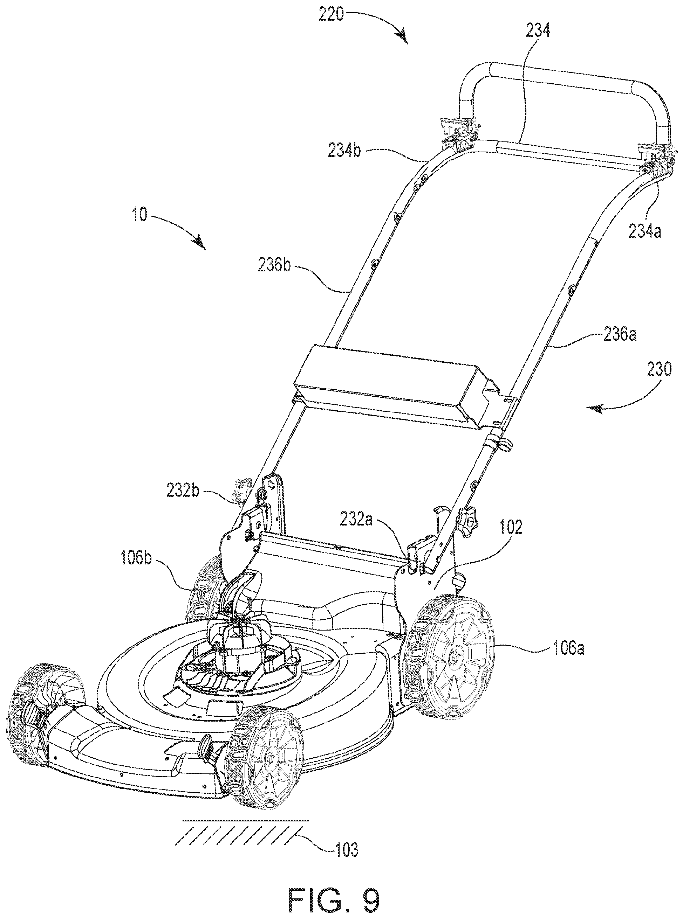

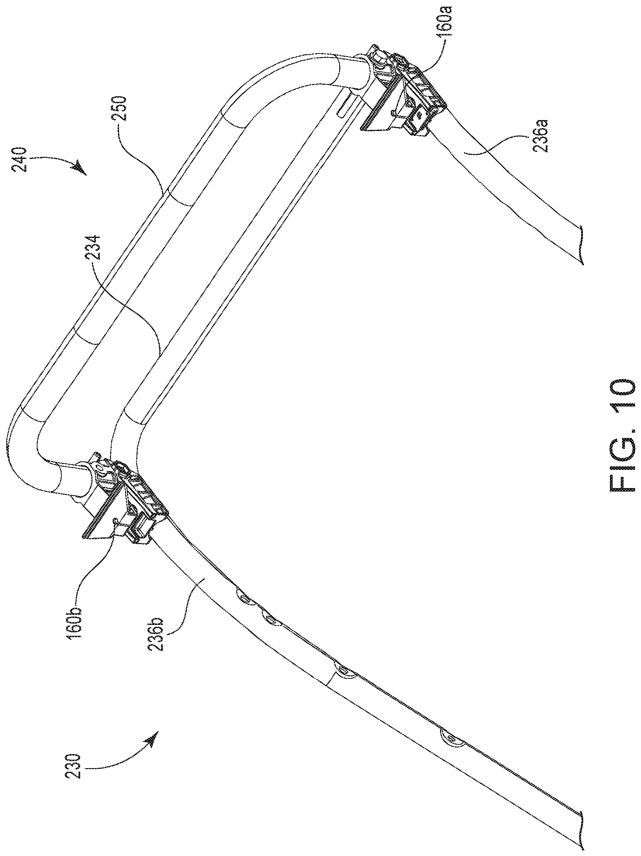

As shown in FIGS. 9 and 10, in one or more embodiments, the mower 10 may include another embodiment of a control system to assist in controlling the mower 10 (e.g., assisting in guiding and propelling the mower 10 across the ground surface 103). For example, as shown in FIGS. 9 and 10, the control system may include a handle assembly 220 extending from the chassis 102 so that an operator can guide the mower 10 across the ground surface 103. Similar to the other embodiments described herein, the handle assembly 220 may include a handle member 230 extending upwardly and rearwardly from the chassis 102 (e.g., to a position behind the chassis 102 proximate an operator walking behind the mower 10). For example, the handle member 230 may include at least one handle tube 236 (e.g., a left handle tube 236a and a right handle tube 236b spaced apart from one another) extending between a lower end 232 (e.g., attached to the chassis 102) and an upper end 234. Further, in one or more embodiments, the upper end 234 of the handle member 230 may extend between, and join, the left and right handle tubes 236a, 236b.

The control system may also include a speed control apparatus 240 as shown in FIG. 10. The control system may be configured to activate or energize the electric motors of the mower 10 to propel the chassis 102 across the ground surface 103. In the embodiment illustrated in FIGS. 9 and 10, the speed control apparatus 240 may include a singular control grip 250 operably connected to (e.g., positioned at or near the upper end 234), and movable relative to (e.g., linearly, pivotally, rotationally, etc.), the handle member 230. The singular control grip 250 may be movably connected to the handle member 230 e.g., between the left and right handle tubes 236a, 236b. The singular control grip 250 may move as one single continuous piece between the left and right handle tubes 236a, 236b (e.g., regardless of whether the singular control grip 250 includes a single continuous piece or multiple pieces fixedly coupled to one another). As shown in FIGS. 9 and 10, a single tube may form the singular control grip 250.

The singular control grip 250 may be operably connected to both electric motors to proportionally control each of the corresponding drive wheels 106 independently. Specifically, the singular control grip 250 may include a control device 160 at each end of the singular control grip 250 to operably couple the ends of the singular control grip to the handle member 230. The control device 160 coupling each end of the singular control grip 250 may include similar components (e.g., magnets and/or sensors (e.g., magnetic sensor, force sensor, Hall sensor, etc.)) as described herein with respect to pivoting control device 160 of FIGS. 3A-3C, such that the movement of the singular control grip 250 via the control device 160 may engage or control the electric motors as described herein. In other words, the control device 160 (e.g., the left and right control devices 160a, 160b) may be operably coupled (e.g., electrically or mechanically) to the corresponding electric motor (e.g., left and right electric motors, respectively) to convert movement of the singular control grip 250 to proportional output (movement) of the corresponding electric motor.

Specifically, movement proximate one end (e.g., proximate the left or right side) of the singular control grip 250 may be configured to control or engage the electric motor on the corresponding side (e.g., through the components of the control device 160) and, thereby, propel the corresponding drive wheel. For example, movement (e.g., pushing forward and downward relative to the handle member 230) of the left side (e.g., proximate the left end) of the singular control grip 250 may be configured to control or engage the left electric motor and movement (e.g., pushing forward and downward relative to the handle member 230) of the right side (e.g., proximate the right end) of the singular control grip 250 may be configured to control or engage the right electric motor. It is noted that the singular control grip 250 is one singular unit, therefore, movement of the left side of the singular control grip 250 may impact movement of the right side of the singular control grip 250, and vice versa. However, a twisting or torque may be applied to the singular control grip 250 such that the left and right ends of the singular control grip 250 are not necessarily (although they could be) at the exact same position relative to the handle member 230 (e.g., even a very small or minimal difference in position between the left and right ends). For example, in one or more embodiments, force sensors may be disposed proximate each end of the singular control grip and may be configured to monitor displacements of a fraction of an inch (e.g., 0.03 millimeters (0.001 inches)). Having such torque on the singular control grip 250 may allow for a differential speed or torque output between the right and left electric motor (and thereby the right and left drive wheel, respectively).

For example, pushing forward proximate the left end of the singular control grip 250 (e.g., and applying no force proximate the right end of the singular control grip 250) may engage the left electric motor to a greater extent than the right electric motor (e.g., because the right end of the singular control grip 250 may move less than the left end) and cause the mower 10 to turn to the right. Similarly, pushing forward proximate the right end of the singular control grip 250 (e.g., and applying no force proximate the left end of the singular control grip 250) may engage the right electric motor to a greater extent than the left electric motor (e.g., because the left end of the singular control grip 250 may move less than the right end).

Further, in one or more embodiments, the singular control grip 250 may also move in a rearward direction (e.g., relative to the handle member 230) to control or engage the electric motors to proportionally drive the corresponding drive wheel 106 in a rearward (e.g., reverse) direction. Similarly, a differential rearward speed difference (e.g., even a minimal difference) may be applied to the electric motors by applying a torque or twisting of the singular control grip 250 (e.g., by pushing one end of the singular control grip 250 more rearward than the other end).

In one or more embodiments, the left end of the singular control grip 250 (e.g., through the left control device 160a) may be configured to control or engage the right electric motor and the right end of the singular control grip 250 (e.g., through the right control device 160b) may be configured to control or engage the left electric motor.

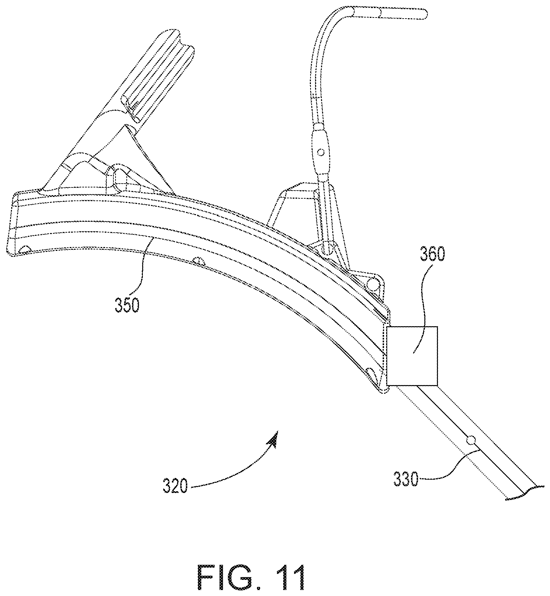

As shown in FIG. 11, in one or more embodiments, the vehicle 10 may include yet another embodiment of a control system to assist in controlling the vehicle 10 (e.g., assisting in guiding and propelling the vehicle 10 across the ground surface). For example, the control system may include a handle assembly 320 and a control grip 350 configured to move relative to the handle assembly 320 (e.g., a handle member 330 of the handle assembly 320). Specifically, the control grip 350 may move linearly (e.g., translate) or move along an arc relative to the handle member 330 (e.g., sliding along the handle member 330). Further, the control system may include a force sensor 360 positioned between the control grip 350 and the handle member 330 (e.g., components of the force sensor 360 distributed therebetween to measure relative forces applied). For example, the force sensor 360 may be configured to measure a force applied to the control grip 350 in a forward and/or rearward direction. Further yet, a force sensor 360 may be positioned proximate each side (e.g., left and right ends) of the control grip 350 such that a differentiation of force applied between each side may be determined (e.g., to independently and variably control electric motors associated with each side as described herein).

Illustrative embodiments are described, and reference has been made to possible variations of the same. These and other variations, combinations, and modifications will be apparent to those skilled in the art, and it should be understood that the claims are not limited to the illustrative embodiments set forth herein.

## Claims

1. An outdoor maintenance vehicle (10) comprising:
a housing (117) comprising an inner surface;
a prime mover (104) attached to the housing and operable to power a tool;
left and right drive wheels rotatably coupled to the housing and configured to support the housing upon a ground surface; and
first (170a) and second (170b) electric motors fixedly coupled to the housing and spaced apart from one another, wherein the first electric motor is operably coupled to the left drive wheel (106a) and the right electric motor is operably coupled to the right drive wheel (106b) such that the left and right drive wheels rotate when their associated electric motor is energized,
the outdoor maintenance vehicle being **characterised by** further comprising an alignment shaft (180) connected between the first and second electric motors.

2. The outdoor maintenance vehicle (10) according to claim 1, wherein each of the first and second electric motors (170a, 170b) is operably coupled to its corresponding drive wheel (106a, 106b) through a shaft (172a, 172b), wherein each shaft is configured to rotate independently from the other shaft.

3. The outdoor maintenance vehicle (10) according to claim 2, wherein the alignment shaft (180) is operably connected to the shafts (172a, 172b) of both of the first and second electric motors (170a, 170b), and wherein the alignment shaft is configured to rotate independently from at least one of the shafts.

4. The outdoor maintenance vehicle (10) according to either claim 2 or claim 3, wherein each of the shafts (172a, 172b) and the alignment shaft (180) are aligned along an axis.

5. The outdoor maintenance vehicle (10) according to either claim 2 or claim 3, wherein each of the shafts (172a, 172b) is configured to rotate about an axis that is parallel to an axis of rotation of its corresponding drive wheel (106a, 106b).

6. The outdoor maintenance vehicle (10) according to any one of claims 2 to 5, wherein each shaft (172a, 172b) extends through an opening of the housing (117), wherein a plate (114) is operably connected to each shaft and to a wheel shaft (110) of the corresponding drive wheel such that each shaft and its corresponding drive wheel shaft are spaced apart by a fixed distance.

7. The outdoor maintenance vehicle (10) according to claim 1, wherein each of the first and second electric motors (170a, 170b) comprises an inner shaft (176a, 176b) and an outer shaft (172a, 172b) extending laterally from respective opposite sides of the electric motor, wherein the outer shaft of each of the first and second electric motors is operably coupled to its corresponding drive wheel (106a, 106b) and the inner shafts of the first and second electric motors are aligned and extend toward one another.

8. The outdoor maintenance vehicle (10) according to claim 7, wherein the alignment shaft comprises a pin (181) extending through both of the inner shafts (176a, 176b) of both the first and second electric motors (170a, 170b).

9. The outdoor maintenance vehicle (10) according to claim 7, wherein the alignment shaft comprises a tube (182) extending between, and surrounding a portion of, the inner shafts (176a, 176b) of both of the first and second electric motors (170a, 170b).

10. The outdoor maintenance vehicle (10) according to any one of claims 1 to 9, wherein the alignment shaft (180) is only connected to the housing (117) through the first and second electric motors (170a, 170b).

11. The outdoor maintenance vehicle according to any one of claims 1 to 10, wherein each of the first and second electric motors (170a, 170b) is coupled to the housing (117) by only one bracket (174).

12. The outdoor maintenance vehicle according to any one of claims 1 to 11, further comprising:
a handle assembly (120) extending upwardly and rearwardly from the housing (117); and
a speed control apparatus (140) comprising a first control grip (150a) and a second control grip (150b), wherein the first and second control grips are movably connected to the handle assembly, wherein movement of the first control grip engages the first electric motor (170a) and movement of the second control grip engages the second electric motor (170b).

## Patentansprüche

1. Außenbereichswartungsfahrzeug (10), umfassend:
ein Gehäuse (117), umfassend eine Innenfläche;
eine Antriebsmaschine (104), die an dem Gehäuse befestigt ist und betrieben werden kann, um ein Werkzeug anzutreiben;
linke und rechte Antriebsräder, die drehbar an das Gehäuse gekoppelt sind und konfiguriert sind, um das Gehäuse auf einer Bodenfläche zu stützen; und
erste (170a) und zweite (170b) Elektromotoren, die an das Gehäuse fest gekoppelt sind und voneinander beabstandet sind, wobei der erste Elektromotor drehbar an das linke Antriebsrad (106a) gekoppelt ist und der rechte Elektromotor drehbar an das rechte Antriebsrad (106b) gekoppelt ist, sodass sich das linke und rechte Antriebsrad drehen, wenn ihr zugehöriger Elektromotor erregt ist,
wobei das Außenbereichswartungsfahrzeug **dadurch gekennzeichnet ist, dass** es ferner eine Ausrichtungswelle (180) umfasst, die zwischen dem ersten und zweiten Elektromotor verbunden sind.

2. Außenbereichswartungsfahrzeug (10) nach Anspruch 1, wobei jeder aus dem ersten und zweiten Elektromotor (170a, 170b) an sein entsprechendes Antriebsrad (106a, 106b) durch eine Welle (172a, 172b) operabel gekoppelt ist, wobei jede Welle konfiguriert ist, um sich unabhängig von der anderen Welle zu drehen.

3. Außenbereichswartungsfahrzeug (10) nach Anspruch 2, wobei die Ausrichtungswelle (180) mit den Wellen (172a, 172b) von beiden aus dem ersten und zweiten Elektromotor (170a, 170b) operabel verbunden ist, und wobei die Ausrichtungswelle konfiguriert ist, um sich unabhängig von mindestens einer der Wellen zu drehen.

4. Außenbereichswartungsfahrzeug (10) nach entweder Anspruch 2 oder Anspruch 3, wobei jede der Wellen (172a, 172b) und die Ausrichtungswelle (180) entlang einer Achse ausgerichtet sind.

5. Außenbereichswartungsfahrzeug (10) nach entweder Anspruch 2 oder Anspruch 3, wobei jede der Wellen (172a, 172b) konfiguriert ist, um sich um eine Achse zu drehen, die parallel zu einer Drehachse ihres entsprechenden Antriebsrads (106a, 106b) ist.

6. Außenbereichswartungsfahrzeug (10) nach einem der Ansprüche 2 bis 5, wobei sich jede Welle (172a, 172b) durch eine Öffnung des Gehäuses (117) erstreckt, wobei eine Platte (114) operabel mit jeder Welle und mit einer Radwelle (110) des entsprechenden Antriebsrads verbunden ist, sodass jede Welle und ihre entsprechende Antriebsradwelle um eine feste Distanz beabstandet sind.

7. Außenbereichswartungsfahrzeug (10) nach Anspruch 1, wobei jeder aus dem ersten und zweiten Elektromotor (170a, 170b) eine Innenwelle (176a, 176b) und eine Außenwelle (172a, 172b) umfasst, die sich lateral von jeweiligen gegenüberliegenden Seiten des Elektromotors erstrecken, wobei die Außenwelle von jedem aus dem ersten und zweiten Elektromotor operabel an ihr entsprechendes Antriebsrad (106a, 106b) gekoppelt ist, und die Innenwellen des ersten und zweiten Elektromotors ausgerichtet sind und sich zueinander erstrecken.

8. Außenbereichswartungsfahrzeug (10) nach Anspruch 7, wobei die Ausrichtungswelle einen Zapfen (181) umfasst, der sich durch beide der Innenwellen (176a, 176b) von beiden aus dem ersten und zweiten Elektromotor (170a, 170b) erstreckt.

9. Außenbereichswartungsfahrzeug (10) nach Anspruch 7, wobei die Ausrichtungswelle ein Rohr (182) umfasst, das sich zwischen den Innenwellen (176a, 176b) von beiden aus dem ersten und zweiten Elektromotor (170a, 170b) erstreckt und einen Abschnitt davon umgibt.

10. Außenbereichswartungsfahrzeug (10) nach einem der Ansprüche 1 bis 9, wobei die Ausrichtungswelle (180) nur mit dem Gehäuse (117) durch den ersten und zweiten Elektromotor (170a, 170b) verbunden ist.

11. Außenbereichswartungsfahrzeug nach einem der Ansprüche 1 bis 10, wobei jeder aus dem ersten und zweiten Elektromotor (170a, 170b) an das Gehäuse (117) durch nur eine Halterung (174) gekoppelt ist.

12. Außenbereichswartungsfahrzeug nach einem der Ansprüche 1 bis 11, ferner umfassend:
eine Griffanordnung (120), die sich vom Gehäuse nach oben und nach hinten (117) erstreckt; und
eine Drehzahlregelungsvorrichtung (140), umfassend einen ersten Steuergriff (150a) und einen zweiten Steuergriff (150b), wobei der erste und zweite Steuergriff beweglich mit der Griffanordnung verbunden sind, wobei Bewegung des ersten Steuergriffs den ersten Elektromotor (170a) in Eingriff bringt und Bewegung des zweiten Steuergriffs den zweiten Elektromotor (170b) in Eingriff bringt.

## Revendications

1. Véhicule d'entretien d'extérieur (10) comprenant :
un châssis (117) comprenant une surface intérieure,
un moteur principal (104) fixé au châssis et destiné à mettre en mouvement un outil,
des roues motrices gauche et droite couplées de manière rotative au châssis et conçues pour supporter le châssis au-dessus d'un sol, et
des premier (170a) et deuxième (170b) moteurs électriques couplés de manière fixe au châssis et espacés l'un de l'autre, le premier moteur électrique étant couplé de manière fonctionnelle à la roue motrice gauche (106a) et le moteur électrique droit étant couplé de manière fonctionnelle à la roue motrice droite (106b) de façon que les roues motrices gauche et droite tournent lorsque leur moteur électrique associé est alimenté ;
le véhicule d'entretien d'extérieur étant **caractérisé en ce qu'**il comprend en outre un arbre d'alignement (180) monté entre les premier et deuxième moteurs électriques.

2. Véhicule d'entretien d'extérieur (10) selon la revendication 1, dans lequel chacun des premier et deuxième moteurs électriques (170a, 170b) est couplé de manière fonctionnelle à sa roue motrice (106a, 106b) correspondante par l'intermédiaire d'un arbre (172a, 172b), chacun des arbres étant conçu pour tourner indépendamment de l'autre.

3. Véhicule d'entretien d'extérieur (10) selon la revendication 2, dans lequel l'arbre d'alignement (180) est raccordé de manière fonctionnelle aux arbres (172a, 172b) des premier et deuxième moteurs électriques (170a, 170b), et l'arbre d'alignement est conçu pour tourner indépendamment d'au moins un des arbres.

4. Véhicule d'entretien d'extérieur (10) selon la revendication 2 ou la revendication 3, dans lequel chacun des arbres (172a, 172b) et l'arbre d'alignement (180) sont alignés le long d'un axe.

5. Véhicule d'entretien d'extérieur (10) selon la revendication 2 ou la revendication 3, dans lequel chacun des arbres (172a, 172b) est conçu pour tourner sur un axe parallèle à un axe de rotation de sa roue motrice (106a, 106b) correspondante.

6. Véhicule d'entretien d'extérieur (10) selon l'une quelconque des revendications 2 à 5, dans lequel chaque arbre (172a, 172b) s'étend à travers une ouverture du châssis (117), une plaque (114) étant raccordée de manière fonctionnelle à chaque arbre et à un arbre (110) de la roue motrice correspondante, de façon que chaque arbre et son arbre de roue motrice correspondant sont espacés d'une distance fixe.

7. Véhicule d'entretien d'extérieur (10) selon la revendication 1, dans lequel chacun des premier et deuxième moteurs électriques (170a, 170b) comprend un arbre intérieur (176a, 176b) et un arbre extérieur (172a, 172b) s'étendant latéralement à partir de côtés opposés respectifs du moteur électrique, l'arbre extérieur de chacun des premier et deuxième moteurs électriques étant couplé de manière fonctionnelle à sa roue motrice (106a, 106b) correspondante et les arbres intérieurs des premier et deuxième moteurs électriques étant alignés et s'étendant l'un vers l'autre.

8. Véhicule d'entretien d'extérieur (10) selon la revendication 7, dans lequel l'arbre d'alignement comprend une broche (181) s'étendant à travers les deux arbres intérieurs (176a, 176b) des premier et deuxième moteurs électriques (170a, 170b).

9. Véhicule d'entretien d'extérieur (10) selon la revendication 7, dans lequel l'arbre d'alignement comprend un tube (182) s'étendant entre les arbres intérieurs (176a, 176b) des premier et deuxième moteurs électriques (170a, 170b) et entourant une portion de ceux-ci.

10. Véhicule d'entretien d'extérieur (10) selon l'une quelconque des revendications 1 à 9, dans lequel l'arbre d'alignement (180) est uniquement raccordé au châssis (117) par l'intermédiaire des premier et deuxième moteurs électriques (170a, 170b).

11. Véhicule d'entretien d'extérieur selon l'une quelconque des revendications 1 à 10, dans lequel chacun des premier et deuxième moteurs électriques (170a, 170b) est couplé au châssis (117) par un seul étrier (174).

12. Véhicule d'entretien d'extérieur selon l'une quelconque des revendications 1 à 11, comprenant en outre :
un ensemble de poignées (120) s'étendant vers le haut et vers l'arrière à partir du châssis (117), et
un dispositif de commande de vitesse (140) comprenant une première poignée de commande (150a) et une deuxième poignée de commande (150b), les première et deuxième poignées de commande étant raccordées de manière mobile à l'ensemble de poignées, un mouvement de la première poignée de commande sollicitant le premier moteur électrique (170a) et un mouvement de la deuxième poignée de commande sollicitant le deuxième moteur électrique (170b).
